(19) Europäisches Patentamt
European Patent Office
Office européen des brevets

(11) **EP 2 731 262 B1**

(12) **EUROPEAN PATENT SPECIFICATION**

(45) Date of publication and mention
of the grant of the patent:
**14.06.2017 Bulletin 2017/24**

(51) Int Cl.:
**H02P 27/06** *(2006.01)*    **H02P 6/08** *(2016.01)*

(21) Application number: **12811643.1**

(86) International application number:
**PCT/CN2012/070281**

(22) Date of filing: **12.01.2012**

(87) International publication number:
**WO 2013/007107 (17.01.2013 Gazette 2013/03)**

(54) **VARIABLE FREQUENCY SPEED CONTROL SYSTEM FOR MOTOR**

GESCHWINDIGKEITSSTEUERUNGSSYSTEM MIT VARIABLER FREQUENZ FÜR EINEN MOTOR

SYSTÈME DE COMMANDE DE VITESSE À FRÉQUENCE VARIABLE POUR MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.07.2011 CN 201110193761**

(43) Date of publication of application:
**14.05.2014 Bulletin 2014/20**

(73) Proprietor: **Dayu Electric Co., Ltd.
Xiaogan, Hubei 432000 (CN)**

(72) Inventors:
• **WANG, Yihua**
  **Xiaogan city**
  **Hubei 432000 (CN)**
• **CHENG, Shiguo**
  **Xiaogan city**
  **Hubei 432000 (CN)**
• **NING, Guoyun**
  **Xiaogan city**
  **Hubei 432000 (CN)**
• **ZENG, Xianjie**
  **Xiaogan city**
  **Hubei 432000 (CN)**

(74) Representative: **Fisauli, Beatrice A. M.
Con Lor S.p.A
Via Renato Fucini, 5
20133 Milano (IT)**

(56) References cited:
CN-A- 1 713 511        CN-A- 101 587 146
CN-A- 101 951 222     CN-A- 101 951 222
CN-A- 102 244 496     CN-A- 102 244 497
CN-A- 102 255 588     CN-U- 202 111 662
JP-A- 2005 168 212    JP-A- 2010 063 221
US-A- 5 798 631       US-A1- 2011 074 365

**Description**

Field of the Invention

The present invention relates to electric motor technologies and more particularly to a frequency conversion and speed regulation system of electric motor.

Background of the Invention

Currently, the frequency conversion and speed regulation of a high-voltage electric motor typically uses a high-voltage converter to control the high-voltage electric motor. In order for the safe reliability of the entire speed regulation system, the capacity of the high-voltage converter commonly used is greater than the nominal capacity of the high-voltage electric motor. This results in that the high-voltage converter has the high costs, much volume, sophisticated control system, and difficult operation and maintenance, which severely limit its widespread use.

Patent document CN 101 951 222 A discloses a control method of a brushless double-fed motor wherein the observed control-side motor flux linkage and motor torque are used as feedback quantities to be compared with a given value.

Patent document US 2011/074365 A1 discloses a wind power generating system including a unit for eliminating harmonics component of specified-order from inputted current detection value of a grid-side converter and a unit for controlling the grid-side converter using the current detection value in which harmonics are eliminated.

Patent document US 5 798 631 A discloses a variable speed, constant frequency (VSCF) system utilizing a doubly-fed machine (DFM) to maximize the output power of the system. The system includes a power converter that provides a frequency signal and a current signal to the DFM. The power converter is controlled by an adaptive controller. The controller signals the converter to vary its frequency signal and thereby the rotor speed of the DFM until a maximum power output is sensed. The controller also signals the converter to vary its current signal and thereby the portions of power carried by the respective windings until a maximum power output is sensed.

SUMMARY OF THE INVENTION

In view of the above-mentioned problems, it is an object of this invention, which is defined in the appended claims, to provide a frequency conversion and speed regulation system of electric motor, which can control a high-voltage electric motor with large power by using a low-voltage frequency conversion and speed regulation device with small power.

Embodiments of the present invention provide a frequency conversion and speed regulation system of electric motor, wherein, the system comprises:

- a electric motor, including:

  - a first stator winding having the pole pair number G of a first winding for connecting to a high-voltage AC power supply;
  - a second stator winding having the pole pair number D of a second winding;
  - a rotor winding;

- and frequency conversion and speed regulation device, including :

  - a rectifying unit, its input end being connected to the low-voltage AC power supply;
  - a inverting unit, at least one of its input ends being connected to the output end of the rectifying unit, and its output end being connected to the second stator winding;
  - a first current detecting unit for detecting the three-phase current of the first stator winding;
  - a second current detecting unit for detecting the three-phase current of the second stator winding;
  - a controller, one of its input ends being connected to the first current detecting unit, the other of its input ends being connected to the second current detecting unit, one of its output ends being connected to at least another one of the input ends of the inverting unit for controlling fundamental components and harmonic components separately based on the given value, into which the detected three-phase currents of the first stator winding and second stator winding are respectively separated, to obtain the control signal outputted to the inverting unit.

With the frequency conversion and speed regulation system of electric motor of embodiments of the present invention, the first stator winding of the electric motor may be directly powered by high-voltage AC power supply, such as a high-voltage electricity grid, while the second stator winding can be powered by the frequency conversion and speed regulation device, such that, a high-voltage large power electric motor can be controlled by using a frequency conversion and speed regulation device with the low-voltage small power, thereby saving energy, simultaneously, the overall efficiency of the system being much larger than that of the traditional converter and electric motor system thereof.

BRIEF DESCRIPTION OF DRAWINGS

Other features, characteristics, advantages, and benefits of the invention may become more apparent from the following detailed description taken in conjunction with the accompanying drawings. Wherein,

Figure 1 shows a frequency conversion and speed regulation system of electric motor according to an embodiment of the present invention;

Figure 2 shows a schematic flow diagram of a frequency conversion control method according to an embodiment of the present invention;

Figure 3 shows a schematic diagram of the separation of the three-phase current of the control winding in a particular embodiment of the frequency conversion control method according to the embodiment of the present invention;

Figure 4 shows a schematic diagram of the separation of the three-phase current of the power winding in a particular embodiment of the frequency conversion control method according to the embodiment of the present invention;

Figure 5 shows a schematic diagram of the vector control in a particular embodiment of the frequency conversion control method according to the embodiment of the present invention;

Figure 6 shows a controller according to an embodiment of the present invention.

DETAILED DESCRIPTION

The various embodiments of this invention will be described in more detail in the following with reference to the accompanying drawings.

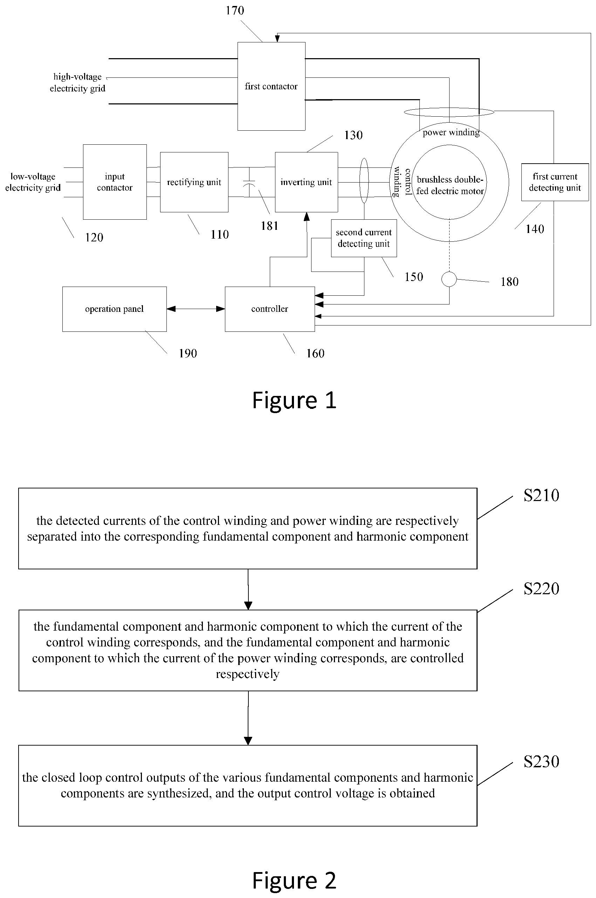

Figure 1 shows a frequency conversion and speed regulation system of electric motor according to an embodiment of the present invention. As shown in Figure 1, the frequency conversion and speed regulation system of electric motor of this embodiment comprises an electric motor and frequency conversion and speed regulation device. Wherein, in the speed regulation system of this embodiment, the electric motor comprises a first and second stator windings, wherein, the first stator winding (i.e. a power winding or high-voltage winding) has the pole pair number G of the first winding for connecting to a high-voltage AC power supply, such as a high-voltage electricity grid, wherein, the second stator winding (i.e. a control winding or low-voltage winding) has the pole pair number D of the second winding for connecting to the frequency conversion and speed regulation device with the low voltage. The electric motor also comprises a rotor, and its rotor winding may employ a winding of multiphase wire wrapping type. In one example, the number of the phase of the rotor winding, m, satisfies the following relation:

$$m=(G+D)/m_k,$$

and in the formula, when G+D is odd, $m_k=1$, and when G+D is even, $m_k=2$.

According to the theory referring to the winding "tooth harmonic " magnetomotive force in the AC electric motor, with regard to the above electric motor, when the high-voltage winding is connected to the high-voltage power frequency AC power supply and the low-voltage winding is connected to the frequency conversion power supply, the rotor winding can simultaneously generate two kinds of the pole pair number for the rotational magnetomotive force, G and D, and the rotational speed of the high-voltage winding magnetomotive force is:

n=60 * fg/G, wherein, fg is a high-voltage AC power frequency;

the rotational speed of the low-voltage winding magnetomotive force is:

$n=60 * f_d/D$, wherein $f_d$ is the fundamental frequency of the frequency conversion power supply;

and the rotation directions of the two kinds of magnetomotive force are opposite, and under the action of two kinds of the rotational magnetomotive force, the rotational speed of the rotor is:

$$n=60\times\ \left(f_g\pm f_d\right)\ /(G+D),$$

thus, the frequency conversion and speed regulation of electric motor can be achieved by the frequency conversion control of the low-voltage winding.

Illustratively, the electric motor as described above is a brushless double-fed electric motor.

In this embodiment, the frequency conversion and speed regulation device which is connected with the electric motor and performed the frequency conversion and speed regulation on the electric motor, it comprises: a rectifying unit 110, its input end being connected to the low-voltage AC power supply via an input contactor 120, such as a low-voltage electrical grid; inverting unit 130, including a plurality of input ends, at least one of its input ends being connected to the output end of the rectifying unit, its output end being connected to the second stator winding (control winding), the inverting unit receiving the DC power supply which the rectifying unit outputs, and receiving the control signal which the controller 160 outputs; first current detecting unit 140 for detecting the three-phase current of the first stator winding (power winding), and its input end being connected to the first stator winding, i.e., power winding, as shown in Figure 1, for the implementation, its input end being connected between the electrical grid and the first stator windings of electric motor, i.e., the power winding, its output end being connected to the controller 160; a second current detecting unit 150 for detecting the three-phase current of the second stator winding, its input end being connected to the second stator winding, as shown in Figure 1, for the implementation, its input end may be connected between the inverting unit and the second stator winding of the electric motor, i.e., control winding, its output end being connected to the controller 160; controller 160 having a plurality of input ends and output ends, one of its input ends being connected to the first current detecting unit for receiving the detected three-phase current of the first stator winding which the first current detecting unit outputs, the other of its input ends being connected to the second current detecting unit for receiving the detected three-phase current of the second stator winding which the second current detecting unit outputs, one of output ends of the controller 160 being connected to at least another one of the input ends of the inverting unit to input the frequency conversion control signal into the inverting unit to perform the frequency conversion and speed regulation on the electric motor; a first contactor 170, the different input ends of a plurality of its input ends being connected to the high-voltage AC power supply and the other of output ends of the controller respectively, its output ends being connected to the first stator winding for controlling the powering-on and powering-off of the power winding in accordance with signals which the controller outputs.

As shown in Figure 1, the frequency conversion and speed regulation system of electric motor of this embodiment further may include: an encoder 180 connected directly to the shaft of the brushless double-fed electric motor for outputting the information relevant to a location of the rotor of the brushless double-fed electric motor to the controller. With the information which the encoder outputs, the rotational speed of the rotor and the phase angle of the rotor magnetomotive force may be determined. In particular, the encoder may be mounted on the shaft of the electric motor.

As shown in Figure 1, illustratively, the frequency conversion and speed regulation system of electric motor of this embodiment further may include: a control panel 190 connected to the controller 160 for receiving operation instruction and displaying the current state. Illustratively, the operator can input the corresponding control signal into the controller by the control panel, such as inputting the corresponding given signal.

As shown in Figure 1, illustratively, the frequency conversion and speed regulation system of electric motor of this embodiment further may include: a stabilized voltage capacitance 181 connected in parallel with the output end of the rectifying unit for the regulation of the output voltage of the rectifying unit.

For the above electric motor having two stator windings, such as the brushless double-fed electric motor, according to the theory referring to the winding "tooth harmonic" magnetomotive force, in the procedures embodying the invention, the inventors of the present invention have also discovered that the harmonic of the winding results in that the defects of instability exists in the operation of the electric motor, and in the system of the embodiment of the present invention, after receiving the detected three-phase currents of the first stator winding and second stator winding, the controller 160 controls fundamental components and harmonic components separately based on the given value, into which the detected three-phase currents of the first stator winding and second stator winding are respectively separated, to obtain the control signal which is outputted to the inverting unit, and this can overcome the defect that the instability of the operation of the electric motor caused by the presence of harmonic may exist in the operation of this type of electric motor, which results from the interaction of the magnetic fields of the power winding, control winding and the rotor winding, enhancing the stability of the operation of the electric motor. This makes it possible to perform the frequency conversion debug for the above electric motor having two stator windings in an embodiment of the present invention.

In this embodiment, the input contactor, rectifying unit, stabilized voltage capacitance, inverting unit absorb energy from the low-voltage electrical grid, and provide the control winding of the electric motor with the energy, and the power windings of the electric motor absorb the energy from the high-voltage electrical grid via the first contactor.

In this embodiment, an exemplary operational process of the frequency conversion and speed regulation device includes the following: after the input contactor is closed, the voltage of the low-voltage electrical grid is rectified by the rectifying unit, and converts AC power into DC power; after the DC power is regulated by the stabilized voltage capacitance, the consistent DC voltage is obtained; the inverting unit outputs the DC power in the event that the motor is not already in the operation; after an initiating signal has been received from the operator panel, the controller outputs a control signal such that the first contactor closes, and the voltage of the high-voltage electrical grid is applied directly to the power windings of the electric motor, the electric motor starts running; after then, according to a given signal of the rotational speed from the operator panel, the output voltage of the inverting unit is changed by the controller, and thus the speed regulation of the electric motor can be achieved.

The encoder in this invention may be mounted on the shaft of the brushless double-fed electric motor, and directly connected with the shaft of the electric motor, its output signal being sent to the controller, and the rotational speed of the electric motor can be detected. The first current detecting unit and the second current detecting unit may detect the three- phase current of the control winding and power winding respectively by the current Hall sensor, its output signal being sent to the controller.

The inverting unit of the present invention inverts the DC power outputted by the rectifying unit into the three-phase AC power to provide for the control winding of the brushless double-fed electric motor, and the outputted three-phase AC voltage may be a sine wave, and may also be a superposition of several sine waves, and the amplitude and frequency of several frequency voltages may vary according to the control command signal of the controller. With the controller, and according to the detected three-phase current of the power winding and the control winding, the frequency conversion and speed regulation device of the embodiment of the present invention controls the fundamental component and harmonic component of the current of the power winding and the control winding, respectively, and this can control the waveform, amplitude and frequency of the output voltage of the inverting unit, thereby achieving the stable operation of the brushless double-fed electric motor at different load and rotation speed.

As shown in Figure 2, the method of the frequency conversion control by the controller in the frequency conversion and speed regulation device of the embodiment of this invention, comprises the following steps:

Step S210, the detected currents of the control winding and power winding are respectively separated into the corresponding fundamental component and harmonic component;
Step S220, according to given values, the fundamental component and harmonic component to which the current of the control winding corresponds, and the fundamental component and harmonic component to which the current of the power winding corresponds, are controlled respectively;
Step S230, the control outputs of the fundamental components and harmonic components are synthesized, and the output control voltage is obtained.

In particular implementations, the above control may be a closed loop control, such as the closed loop control which is achieved by using proportional integral regulator. It will be appreciated by those skilled in the art that other control algorithms may also be used, such as a proportional-integral-differential and the like. Illustratively, the above control may be achieved by using the control device which may achieve the corresponding control algorithm.

Specifically, the detected three-phase currents are separated into the corresponding fundamental component and harmonic component by the frequency conversion control method of the embodiment of the present invention according to the following steps:

Determining the magnitude of the corresponding fundamental component of the detected three-phase current;
The magnitudes of the fundamental component are multiplied by Sin $\theta$, Sin ($\theta$-120°) , Sin ($\theta$+120°), respectively, obtaining the fundamental component of the detected three-phase current, wherein $\theta$ is the degree of the phase angle of three-phase current fundamental of "a" phase;
The fundamental component is subtracted from the detected three-phase current, obtaining the harmonic components of the detected three-phase current.

Specifically, in the frequency conversion control method of the embodiment of the present invention, the fundamental component and harmonic component to which the three-phase current of the control winding corresponds, and the fundamental component and harmonic component to which the three-phase current of the power winding corresponds, are controlled respectively, and the said control comprising the following:

Depending on the coordinate transformation angle $\theta_1$, the DQ coordinate transformation of the fundamental component of the detected current of the first stator winding may be carried out, and depending on the coordinate transformation angle $\theta_2$, the DQ coordinate transformation of the fundamental component of the detected current of the second stator winding may be carried out, and depending on the coordinate transformation angle $\theta s_1$, the DQ coordinate transformation of the harmonic component of the detected current of the first stator winding may be carried out, and depending on the coordinate transformation angle $\theta_{s2}$, the DQ coordinate transformation of the harmonic component of the detected current of the second stator winding may be carried out, wherein the $\theta_1$ is the phase angle of the first stator winding magnetomotive force, and the $\theta_2$ is the phase angle of the second stator winding magnetomotive force, and the $\theta_{s1}$ is the angle between the phase angles of electric motor rotor magnetomotive force and the first stator winding magnetomotive force, and the $\theta_{s2}$ is the angle between the phase angles of electric motor rotor magnetomotive force and the second stator winding magnetomotive force; wherein, the phase angle of the above stator winding magnetomotive force is the phase angle of "a" phase current which corresponds to the stator winding; the phase angle of the rotor magnetomotive force may be determined according to the information relevant to a location of the rotor which the encoder outputs; According to the corresponding given value of the various fundamental components and harmonic components, the outputted D-axis and Q-axis components after the DQ coordinate transformation are controlled, respectively.

Specifically, the frequency conversion control method of the embodiment of the present invention further comprises the following:

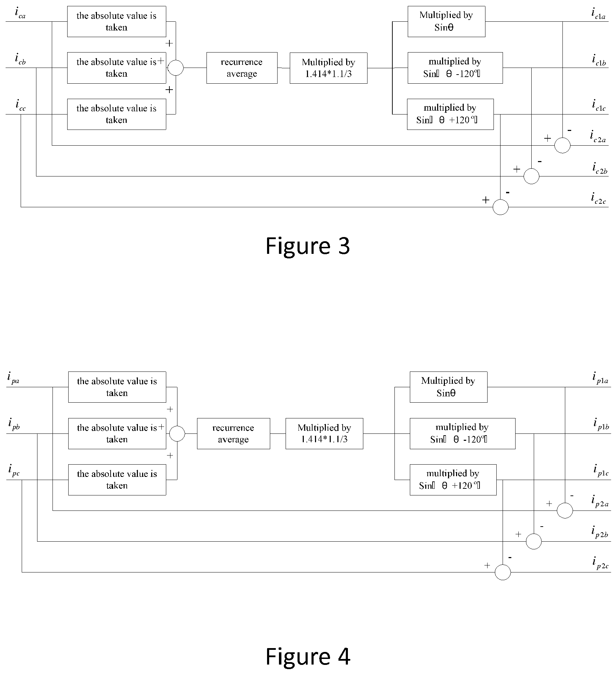

with respect to the various fundamental components and harmonic components, an DQ inverse transformation of the outputted Q-axis and D-axis components after the control is performed; and
each phase of the outputted voltage after an DQ inverse transformation of the various fundamental components and harmonic components is added respectively, obtaining the corresponding phase of an output control voltage. A specific embodiment of the frequency conversion control method of the embodiment of the present invention will be described with reference to Figure 3-5.

The detected current of the control winding is separated into a fundamental component and harmonic component, carrying out the coordinate transformation respectively, comparing the resultant from the transformation to the given, after the regulation of the proportional integrator ( PI ), performing the inverse transformation and the output, and adding the output results, namely, the output of the controller.

At first, the control winding current is separated into a fundamental component and harmonic component, the detected $i_{ca}$, $i_{cb}$, $i_{cc}$ being separated into the fundamental components $i_{c1a}$, $i_{c1b}$, $i_{c1c}$, and harmonic components $i_{c2a}$, $i_{c2b}$, $i_{c2c}$. The absolute value of the detected $i_{ca}$, $i_{cb}$, $i_{cc}$, is taken, three values are summed, then performing the recurrence average and averaging, and the average value is divided by 3, namely, the average value of each phase current, and the average value is multiplied by 1.1*1.414, namely, the magnitude. With the magnitude multiplied respectively by Sin θ, Sin (θ-120°), Sin (θ+120°), the fundamental components of the three-phase current, $i_{c1a}$, $i_{c1b}$, $i_{c1c}$ are obtained, with the $i_{c1a}$, $i_{c1b}$, $i_{c1c}$ subtracted respectively from the detected currents $i_{ca}$, $i_{cb}$, $i_{cc}$, the three-phase harmonic components $i_{c2a}$, $i_{c2b}$, $i_{c2c}$ are obtained. Then, with the same method, the detected power winding currents $i_{pa}$, $i_{pb}$, $i_{pc}$, are separated into the fundamental components $i_{p1a}$, $i_{p1b}$, $i_{p1c}$, and harmonic components $i_{p2a}$, $i_{p2b}$, $i_{p2c}$. In determining the magnitude of the fundamental component, the recurrence average may be not used, only using other average algorithm, such as the conventional average algorithm.

The coordinate transformation angles for performing the DQ coordinate transformation of the various fundamental components and harmonic components are determined. Wherein, the coordinate transformation angle $\theta_1$ ($\theta_p$) of the fundamental component of the power winding is the phase angle of the power winding magnetomotive force, the coordinate transformation angle $\theta_2$ ($\theta_c$) of the fundamental component of the control winding is the phase angle of the control winding magnetomotive force, and the coordinate transformation angle $\theta_{s1}$ of the harmonic component of the power winding is the angle between the phase angles of electric motor rotor magnetomotive force and the power winding magnetomotive force, and the coordinate transformation angle $\theta_{s2}$ of the harmonic component of the control windings is the angle between the phase angles of electric motor rotor magnetomotive force and the control winding magnetomotive force.

After the separation of the fundamental component and harmonic component of the current of the control winding and power winding, the desired coordinate transformation angle being extracted, the vector control can be performed. The coordinate transformation of fundamental component $i_{c1a}$, $i_{c1b}$, $i_{c1c}$, of the control winding current, can be performed at the angle $\theta_c$, then, being transferred to the DQ axis, obtaining the $i_{c1d}$, $i_{c1q}$, the difference between the two values and the given value being taken respectively, and after passing through the PI regulator, performing the inverse transformation and output, thus obtaining $v_{c1a}$, $v_{c1b}$, $v_{c1c}$. Similarly, the same operation is performed at the angle $\theta_{s2}$ on the harmonic components of the control winding current, $i_{c2a}$, $i_{c2b}$, $i_{c2c}$, and the $v_{c2a}$, $v_{c2b}$, $v_{c2c}$ are obtained; the same operation is performed at the angle $\theta_p$ on the fundamental components of the power winding current, $i_{p1a}$, $i_{p1b}$, $i_{p1c}$, and the $v_{p1a}$, $v_{p1b}$, $v_{p1c}$ are obtained; the same operation is performed at the angle $\theta_{s1}$ on the harmonic components of the power winding current, $i_{p2a}$, $i_{p2b}$, $i_{p2c}$, and the $v_{p2a}$, $v_{p2b}$, $v_{p2c}$ are obtained.

Then, the output voltage $v_{ca}$ of the "a" phase of the drive controller is the sum of $v_{c1a}$, $v_{c2a}$, $v_{p1a}$ and $v_{p2a}$; the output voltage $v_{cb}$ of the "b" phase is the sum of the $v_{c1b}$, $v_{c2b}$, $v_{p1b}$ and $v_{p2b}$; the output voltage $v_{cc}$ of the "c" phase is the sum of the $v_{c1c}$, $v_{c2c}$, $v_{p1c}$ and $v_{p2c}$. In this embodiment, the closed loop control is performed by using a PI regulator.

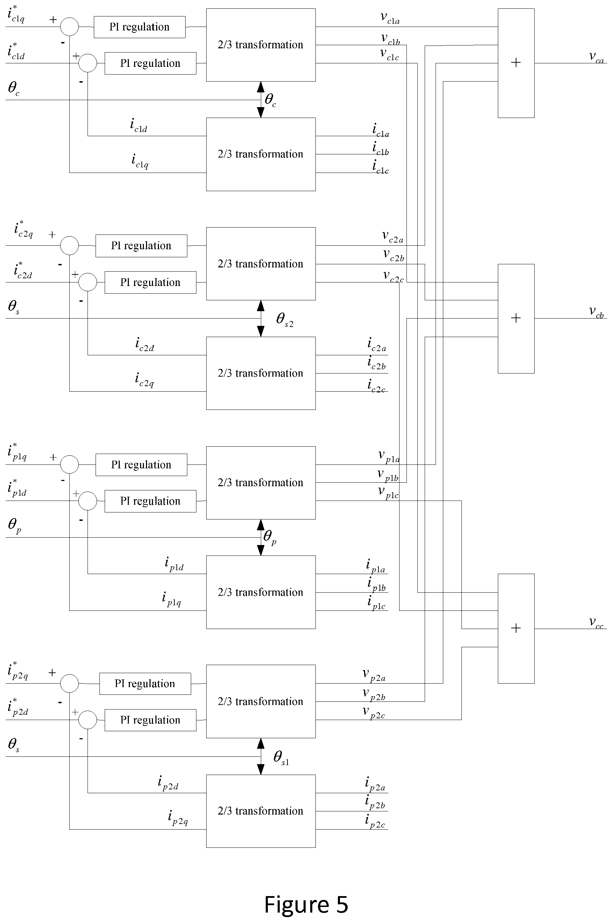

In Figure 5, $i^*_{c1q}$, $i^*_{c1d}$, $i^*_{c2q}$, $i^*_{c2d}$, $i^*_{p1q}$, $i^*_{p1d}$, $i^*_{p2q}$, $i^*_{p2d}$ are the given currents of the corresponding D-axis component and Q-axis component of the various fundamental components and harmonic components, respectively. The given value of the fundamental component and harmonic component may be preset.

In Figure 5, the 3/2 transformation represents the DQ transformation from the three-phase to two-phase for the electric motor coordinate; the 3/2 transformation represents the DQ inverse transformation from two-phase to three-phase for the electric motor coordinate.

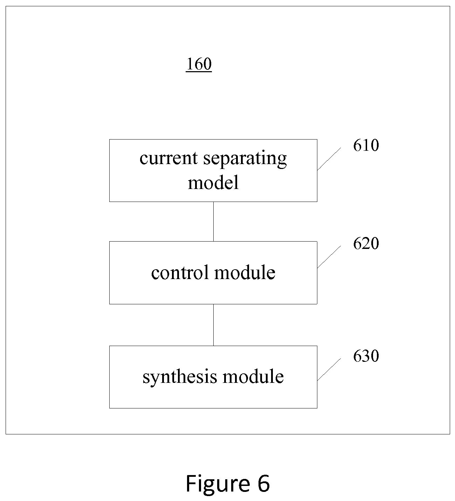

Figure 6 shows the controller of an embodiment of the present invention. The controller 160 includes: a current separating module 610 for separating the three-phase current of the first stator winding detected by the first current detecting unit and the three-phase current of the second stator winding detected by the second current detecting unit into the corresponding fundamental component and harmonic component; control module 620 for controlling respectively the fundamental component and harmonic component to which the detected three-phase currents of the first stator winding corresponds, and the fundamental component and harmonic component of the detected three-phase current of the second stator winding according to the given value; synthesis module 630 for the synthesis of the control output of the various fundamental components and harmonic components to obtain the control signal outputted to the inverting unit.

Preferably, the above control module is closed loop control module for performing the closed loop control.

Further, in the controller of this embodiment, the current separating module comprises the following:

a magnitude determining module for determining the magnitude of the fundamental component which the detected three-phase current corresponds to, wherein, the detected current is the detected three-phase current of the first stator winding or the detected three-phase current of the second stator winding;

a fundamental determining module for making the determined magnitudes of the fundamental component multiplied respectively by Sin $\theta$, Sin ($\theta$-120°), Sin ($\theta$+120°), to obtain the fundamental component of the detected current, wherein the $\theta$ is the degree of the phase angle of " a " phase current in the detected three-phase current;

a harmonic determining module for making the fundamental component subtracted from the detected three-phase current, to obtain the harmonic components of the detected three-phase current.

Further, in the controller of this embodiment, the control module includes: a coordinate transformation module, which is used for the following: depending on the coordinate transformation angle $\theta_1$, the DQ coordinate transformation of fundamental component of the detected current of the first stator winding may be carried out, and depending on the coordinate transformation angle $\theta_2$, the DQ coordinate transformation of the fundamental component of the detected current of the second stator winding may be carried out, and depending on the coordinate transformation angle $\theta_{s1}$, the DQ coordinate transformation of the harmonic component of the detected current of the first stator winding may be carried out, and depending on the coordinate transformation angle $\theta_{s2}$, the DQ coordinate transformation of the harmonic component of the detected current of the second stator winding may be carried out, wherein the $\theta_1$ is the phase angle of the first stator winding magnetomotive force, and the $\theta_2$ is the phase angle of the second stator winding magnetomotive force, and the $\theta_{s1}$ is the angle between the phase angles of electric motor rotor magnetomotive force and the first stator winding magnetomotive force, and the $\theta_{s2}$ is the angle between the phase angles of electric motor rotor magnetomotive force and the second stator winding magnetomotive force; DQ control module for controlling respectively the outputted D-axis and Q-axis components after the DQ coordinate transformation, according to the corresponding given value of the various fundamental components and harmonic components.

Further, the controller of this embodiment further includes: a coordinate inverse transformation module for performing the DQ inverse transformation of the outputted D-axis and Q-axis components after the control with respect to the various fundamental components and harmonic components; the synthesis module is further used to make each phase of the outputted control signal after an DQ inverse transformation of the various fundamental components and harmonic components added respectively, obtaining the corresponding phase of the control signal outputted to the inverting unit.

Further, the control signal outputted to the inverting unit by the controller of this embodiment is a control voltage.

Further, in the controller of this embodiment, the control module is a proportional integral regulation module. Of course, it may also be other control modules, such as proportional-integral-differential (PID) module and the like.

It will be appreciated by those skilled in the art that, the controller 160 may be implemented in software, hardware, or a combination thereof.

It will be appreciated by those skilled in the art that, numerous changes and variations may be made to various embodiments described above without departing from the essence of the invention, and these changes and variations shall fall within the protective scope of the present invention. The protective scope of the present invention should be defined by the appended claims.

**Claims**

1. A frequency conversion and speed regulation system of electric motor, wherein, the system comprises:

   • an electric motor, comprising:

   - a first stator winding having the pole pair number G of a first winding for connecting to a high-voltage AC power supply;
   - a second stator winding having the pole pair number D of a second winding;
   - a rotor winding;

   • a frequency conversion and speed regulation device, comprising :

   - a rectifying unit (110), its input end being connected to the low-voltage AC power supply;
   - a inverting unit (130), at least one of its input ends being connected to the output end of the rectifying unit, its output end being connected to the second stator winding;
   - a first current detecting unit (140) for detecting a three-phase current of the first stator winding;
   - a second current detecting unit (150) for detecting a three-phase current of the second stator winding;
   - a controller (160), one of its input ends being connected to the first current detecting unit, the other of its input ends being connected to the second current detecting unit, one of its output ends being connected to at least another one of the input ends of the inverting unit for controlling fundamental components and harmonic components separately based on the given value, into which the detected three-phase currents of the first stator winding and second stator winding are respectively separated, to obtain the control signal outputted to the inverting unit;

**characterized by the fact that** the rotor winding is of a multiphase wire wrapping type, and the number of phases is m, wherein, $m=(G+D)/m_k$, wherein, when G+D is odd, $m_k=1$, and when G+D is even, $m_k=2$.

2. The frequency conversion and speed regulation system of electric motor according to claim 1, wherein, the system further comprises:

   • an encoder connected directly to the shaft of the brushless double-fed electric motor for outputting the information relevant to a location of the rotor of the brushless double-fed electric motor to the controller.

3. The frequency conversion and speed regulation system of electric motor according to claim 1, wherein, the system further comprises:

   • a first contactor (170), its input ends being connected to the high-voltage AC power supply and another one of the output ends of the controller, its output ends being connected to the first stator winding.

4. The frequency conversion and speed regulation system of electric motor according to claim 1, wherein, the controller (160) comprises:

   • a current separating module (610) for separating the three-phase current of the first stator winding detected by the first current detecting unit and the three-phase current of the second stator winding detected by the second current detecting unit into the corresponding fundamental component and harmonic component;
   • a control module (620) for controlling respectively the fundamental component and harmonic component of the detected three-phase currents of the first stator winding corresponds, and the fundamental component and harmonic component of the detected three-phase current of the second stator winding according to the given value;
   • a synthesis module (630) for the synthesis of the control output of the various fundamental components and harmonic components to obtain a control signal outputted to the inverting unit.

5. The frequency conversion and speed regulation system of electric motor according to claim 4, wherein, the current separating module comprises:

   • a magnitude determining module for determining the magnitude of the fundamental component which the detected three-phase current corresponds to, wherein, the detected current is the detected three-phase current of the first stator winding or the detected three-phase current of the second stator winding;
   • a fundamental determining module for making the determined magnitudes of the fundamental component multiplied respectively by Sinθ,Sin (θ-120°) ,Sin (θ+120°), to obtain the fundamental component of the detected current, wherein the θ is the degree of the phase angle of the fundamental of the" a " phase current in the detected three-phase current;
   • a harmonic determining module for making the fundamental component subtracted from the detected three-phase current, to obtain the harmonic components of the detected three-phase current.

6. The frequency conversion and speed regulation system of electric motor according to claim 5, wherein, the control module comprises:

   • a coordinate transformation module, which is used for the following:

      depending on the coordinate transformation angle $\theta_1$, the DQ coordinate transformation of the fundamental component of the detected current of the first stator winding may be carried out, and depending on the coordinate transformation angle $\theta_2$, the DQ coordinate transformation of the fundamental component of the detected current of the second stator winding may be carried out, and depending on the coordinate transformation angle $\theta_{s1}$, the DQ coordinate transformation of the harmonic component of the detected current of the first stator winding may be carried out, and depending on the coordinate transformation angle $\theta_{s2}$, the DQ coordinate transformation of the harmonic component of the detected current of the second stator winding may be carried out, wherein the $\theta_1$ is the phase angle of the first stator winding magnetomotive force, and the $\theta_2$ is the phase angle of the second stator winding magnetomotive force, and the $\theta_{s1}$ is the angle between the phase angles of electric motor rotor magnetomotive force and the first stator winding magnetomotive force, and the $\theta_{s2}$ is the angle between the phase angles of electric motor rotor magnetomotive force and the second stator winding magnetomotive force;

• a DQ control module for controlling respectively the outputted D-axis and Q-axis components after the DQ coordinate transformation, according to the corresponding given value of the various fundamental components and harmonic components.

7. The frequency conversion and speed regulation system of electric motor according to claim 6, wherein, the controller further comprises:

• a coordinate inverse transformation module for performing the DQ inverse transformation of the outputted D-axis and Q-axis components after the control with respect to the various fundamental components and harmonic components;
• the synthesis module is further used to make each phase of the outputted control signal after an DQ inverse transformation of the various fundamental components and harmonic components added respectively, to obtain the corresponding phase of the control signal outputted to the inverting unit.

8. The frequency conversion and speed regulation system of electric motor according to any one of claims 1-7, wherein, the control signal outputted to the inverting unit by the controller is the control voltage.

9. The frequency conversion and speed regulation system of electric motor according to any one of claims 5-7, wherein, the control module is a proportional - integral regulation module.

**Patentansprüche**

1. Frequenzumwandlungs- und Drehzahlregelungssystem eines Elektromotors, wobei das System umfasst:

• einen Elektromotor, mit:

- einer ersten Statorwicklung mit der Polpaarzahl G einer ersten Wicklung für den Anschluss an eine Hochspannungs-Wechselstromversorgung;
- einer zweiten Statorwicklung mit der Polpaarzahl D einer zweiten Wicklung;
- eine Rotorwicklung;

• einem Frequenzumwandlungs- und Drehzahlregelungssystem, mit:

- einer Rektifikationseinheit (110), dessen Eingangsende mit der Niederspannungswechselstromversorgung verbunden ist;
- einer invertierenden Einheit (130), wobei mindestens eines seiner Eingangsenden mit dem Ausgangsende der Rektifikationseinheit verbunden ist, dessen Ausgangsende mit der zweiten Statorwicklung verbunden ist;
- einer ersten Stromerfassungseinheit (140) um einen Dreiphasenstromes des ersten Stators zu erfassen;
- einer zweiten Stromerfassungseinheit (150) um einen Dreiphasenstrom der zweiten Statorwicklung zu erfassen;
- einem Controller (160), wobei ein seiner Eingangsenden mit der ersten Stromerfassungseinheit verbunden ist, das andere seiner Eingangsenden mit der zweiten Stromerfassungseinheit verbunden ist, wobei eines seiner Ausgangsenden zumindest mit einem anderen der Eingangsenden der invertierenden Einheit zur Steuerung von Grundkomponenten und harmonischen Komponenten getrennt mit Bezug auf den gegebenen Wert ist, wonach die erfassten Dreiphasenströme der ersten Statorwicklung und der zweiten Statorwicklung entsprechend getrennt sind, um das zur invertierenden Einheit ausgegebenes Steuersignal zu erhalten;

**dadurch gekennzeichnet, dass** die Rotorwicklung eine Art von einer mehrphasigen Drahtwicklung ist, und die Anzahl der Phasen m ist, wobei $m=(G+D)/m_k$, wobei wenn G+D ungerade ist, ist $m_k$ =1, und wenn G+D gerade ist, ist $m_k$=2.

2. Frequenzumwandlungs- und Drehzahlregelungssystem eines Elektromotors nach Anspruch 1, wobei das System ferner umfasst:

• einen Encoder der direkt mit der Welle des bürstenlosen doppelversorgten Elektromotors für die Ausgabe von Informationen zuden Controller verbunden ist, die in Bezug auf eine Position des bürstenlosen doppelversorgten Elektromotors wichtig sind.

3. Frequenzumwandlungs- und Drehzahlregelungssystem eines Elektromotors nach Anspruch 1, wobei das System ferner umfasst:

• ein erstes Kontaktelement (170), dessen Einlassenden mit der Hochspannungs-Wechselstromversorgung und mit einem anderen der Enden des Controllers verbunden sind, wobei seine Ausgangsenden mit der ersten Statorwicklung verbunden sind.

**4.** Frequenzumwandlungs- und Drehzahlregelungssystem eines Elektromotors nach Anspruch 1, wobei der Controller (160) umfasst:

• ein Stromtrennmodul (610) zum Trennen des Dreiphasenstromes des ersten Statorwicklung, der von der ersten Stromerfassungseinheit erfasst wird und des Dreiphasenstromes des zweiten Statorwicklung, der von der zweiten Stromerfassungseinheit erfasst wird, in der entsprechenden Grundkomponente und der harmonischen Komponente;
• ein Kontrollmodul (620), um jeweils die Grundkomponente und die harmonische Komponente der erfassten Dreiphasenströme der ersten Statorwicklung, und die Grundkomponenten und die harmonische Komponente des erfassten Dreiphasenstromes der zweiten Statorwicklung nach einem gegebenen Wert, zu steuern;
• ein Synthesemodul (630) für die Synthese des Steuerausgangs der verschiedenen Grundkomponenten und harmonischen Komponenten, um ein zur invertierenden Einheit ausgegebenes Steuersignal zu erhalten.

**5.** Frequenzumwandlungs- und Geschwindigkeitsregelungssystem eines Elektromotors nach Anspruch 4, wobei das Stromtrennmodul umfasst:

• ein Größenbestimmungsmodul um die Größe der Grundkomponente zu bestimmen, deren der erfasste Dreiphasenstrom entspricht, wobei der erfasste Strom entweder der erfasste Dreiphasenstrom der ersten Statorwicklung oder der erfasste Dreiphasenstrom der zweiten Statorwicklung ist;
• ein grundlegendes Bestimmungsmodul um die ermittelten Größen der Grundkomponente jeweils von $\sin\theta$, $\sin(\theta-120°)$, $\sin(\theta+120°)$ zu multiplizieren, um die Grundkomponente des erfassten Stroms zu erhalten, wobei $\theta$ der Grad des Phasenwinkels des Grundwerts des "a"-Phasenstroms beim erfassten Dreiphasenstrom ist;
• ein harmonisches Bestimmungsmodul um die Grundkomponente vom erfassten Dreiphasenstrom zu subtrahieren, um die harmonischen Komponenten des erfassten Dreiphasenstromes zu erhalten.

**6.** Frequenzumwandlungs- und Drehzahlregelungssystem eines Elektromotors nach Anspruch 5, wobei das Steuermodul umfasst:

• ein Koordinatentransformationsmodul, das wie folgt verwendet wird:
• mit Bezug auf den Koordinatentransformationswinkel $\theta_1$, kann die Koordinatentransformation DQ der Grundkomponente des erfassten Stromes der ersten Statorwicklung durchgeführt werden, und mit Bezug auf den Koordinatentransformationswinkel $\theta_2$, kann die Koordinatentransformation der Grundkomponente des erfassten Stromes der zweiten Statorwicklung durchgeführt werden, und mit Bezug auf den Koordinatentransformationswinkel $\theta_{s1}$, kann die Koordinatentransformation DQ der harmonischen Komponente des erfassten Stromes der ersten Statorwicklung durchgeführt werden, und mit Bezug auf den Koordinatentransformationswinkel $\theta_{s2}$, kann die Koordinatentransformation der harmonischen Komponente des erfassten Stromes der zweiten Statorwicklung durchgeführt werden, wobei $\theta_1$ der Phasenwinkel der magnetisch-motorischen Kraft der ersten Statorwicklung ist und $\theta_3$ der Phasenwinkel der magnetisch-motorischen Kraft der zweiten Statorwicklung ist, und $\theta_{s1}$ der Winkel zwischen den Phasenwinkeln der magnetisch-motorischen Kraft des Rotors des Elektromotors und der magnetisch-motorischen Kraft der ersten Statorwicklung ist, und $\theta_{s2}$ der Winkel zwischen den Phasenwinkeln der magnetisch-motorischen Kraft des Rotors des Elektromotors und der magnetisch-motorischen Kraft der zweiten Statorwicklung ist;
• ein Steuermodul DQ jeweils um die entsprechenden ausgegebenen Komponenten der D-Achse und Q-Achse nach der Transformation des DQ-Koordinaten, nach dem entsprechenden gegebenen Wert der verschiedenen Grundkomponenten und harmonischen Komponenten, zu kontrollieren.

**7.** Frequenzumwandlungs- und Drehzahlregelungssystem nach Anspruch 6, wobei der Controller ferner Folgendes umfasst:

• ein Modul zur inversen Koordinatentransformation, um die inverse Transformation DQ der ausgegebenen Komponenten der D-Achse und Q - Achse nach der Kontrolle mit Bezug auf die verschiedene Grundkomponenten und harmonische Komponenten, auszuführen;
• das Synthesemodul wird auch zum Summieren jeder Phase des ausgegebenen Steuersignals nach einer inversen Transformation DQ der verschiedenen Grundkomponenten und harmonischen Komponenten, um die entsprechende Phase des zur invertierenden Einheit ausgegebenen Kontrollsignals zu erhalten.

**8.** Frequenzumwandlungs- und Drehzahlregelung eines Elektromotors nach einem der Ansprüche 1-7, wobei das zur invertierenden Einheit ausgegebene Steuersignal durch den Controller das Spannungssignal ist.

**9.** Frequenzumwandlungs- und Drehzahlregelungssystem eines Elektromotors nach einem der Ansprüche 5 -7, wobei das Steuermodul ein Proportional-Integral - Steuermodul ist.

**Revendications**

**1.** Système de conversion de fréquence et de réglage de vitesse d'un moteur électrique, dans lequel le système comprend:

> • un moteur électrique, comprenant:
>
>> - un premier enroulement de stator avec le nombre G de paires de pôles d'un premier enroulement pour la connexion à une alimentation électrique de haute tension en courant alternatif;
>> - un second enroulement de stator avec le nombre D de paires de pôles d'un deuxième enroulement;
>> - un enroulement de rotor;
>
> • un dispositif de conversion de fréquence et de réglage de vitesse, comprenant:
>
>> - une unité de rectification (110), son extrémité d'entrée étant connectée à l' alimentation à basse tension en courant alternatif;
>> - une unité d'inversion (130), au moins une de ses extrémités d'entrée étant reliée à l'extrémité de sortie de l'unité de rectification, son extrémité de sortie étant reliée au deuxième enroulement de stator;
>> - une première unité de détection de courant (140) pour détecter un courant triphasé du premier enroulement de stator;
>> - une deuxième unité de détection de courant (150) pour détecter un courant triphasé du deuxième enroulement de stator;
>> - un contrôleur (160), une de ses extrémités d'entrée étant connectée à la première unité de détection de courant, l'autre de ses extrémités d'entrée étant connectée à la deuxième unité de détection de courant, l'une de ses extrémités de sortie étant connectée au moins à une autre de ses extrémités d' entrée de l'unité d'inversion pour commander des composantes fondamentales e des composantes harmoniques séparément sur la base de la valeur attribuée, selon lequel les courants triphasés détectées du premier enroulement de stator et du deuxième enroulement de stator sont séparés respectivement, afin d'obtenir le signal de commande émis à l'unité d'inversion;

**caractérisé en ce que** l'enroulement de rotor est un type d'enroulement polyphasé d'un fil, et le nombre de phases est m, où $m = (G+D)/m_k$, où lorsque G+D est impair, $m_k = 1$, et lorsque G+D est pair, $m_k = 2$.

**2.** Système de conversion de fréquence et de réglage de vitesse d'un moteur électrique selon la revendication 1, dans lequel le système comprend en outre:

> • un encodeur relié directement à l'arbre du moteur électrique sans balais à double alimentation pour l'émission d'informations relatives à une position du rotor du moteur électrique sans balais à double alimentation par rapport au dispositif de contrôle.

**3.** Système de conversion de fréquence et de réglage de vitesse d'un moteur électrique selon la revendication 1, dans lequel le système comprend en outre:

> • un premier élément de contact (170), ses extrémités d'entrée étant connectées à l'alimentation électrique à haute tension de courant alternatif et à une autre des extrémités de sortie du dispositif de contrôle, ses extrémités de sortie étant connectées au premier enroulement de stator.

**4.** Système de conversion de fréquence et de réglage de vitesse d'un moteur électrique selon la revendication 1, dans lequel le dispositif de contrôle (160) comprend:

> • un module de séparation de courant (610) pour séparer le courant triphasé du premier enroulement de stator détecté par la première unité de détection de courant et le courant triphasé du deuxième enroulement de stator détecté par la deuxième unité de détection, dans la composante fondamentale et une composante harmonique;
> • un module de commande (620) pour commander respectivement la composante fondamentale et la composante harmonique des courants triphasés détectés du premier enroulement de stator, et la composante fondamentale et la composante harmonique du courant triphasé détecté du deuxième enroulement de stator, selon la valeur assignée;
> • un module de synthèse (630) pour la synthèse de la commande de sortie des différentes composantes fondamentales et des composantes harmoniques, de manière à obtenir un signal de commande émis sur l'unité de sortie.

5. Système de conversion de fréquence et de réglage de vitesse d'un moteur électrique selon la revendication 4, dans lequel le module de séparation de courant comprend:

   • un module de détermination d'amplitude pour déterminer l'amplitude de la composante fondamentale à laquelle correspond le courant triphasé détecté, dans lequel le courant détecté est le courant triphasé détecté du premier enroulement de stator ou le courant triphasé détecté du deuxième enroulement de stator;
   • un module de détermination fondamental pour multiplier les amplitudes déterminées de la composante fondamentale , respectivement , pour Sin $\theta$, Sin ($\theta$-120°), Sin ($\theta$+120°), afin d'obtenir la composante fondamentale du courant détecté, dans lequel $\theta$ est le degré de l'angle de phase fondamental du courant de phase «a» dans le courant triphasé détecté;
   • un module de détermination harmonique pour soustraire la composante fondamentale du courant triphasé détecté, afin d'obtenir les composantes harmoniques du courant triphasé détecté.

6. Système de conversion de fréquence et de réglage de vitesse d'un moteur électrique selon la revendication 5, dans lequel le module de commande comprend:

   • un module de transformation de coordonnées, qui est utilisé comme suit: par rapport à l'angle de transformation de coordonnées $\theta_1$, on peut effectuer la transformation de coordonnées DQ de la composante fondamentale du courant détecté du premier enroulement de stator, et en fonction de l'angle $\theta_2$, on peut effectuer la transformation de coordonnées DQ de la composante fondamentale du courant détecté du deuxième enroulement de stator, et par rapport à l'angle de transformation de coordonnées $\theta_{s1}$, on peut effectuer la transformation de la coordonnée DQ de la composante harmonique du courant détecté du premier enroulement de stator, et par rapport à l'angle de transformation de coordonnées $\theta_{s2}$, on peut effectuer la transformation de la composante harmonique du courant détecté du deuxième enroulement de stator, où $\theta_1$ est l'angle de phase de la force magnéto-motive du premier enroulement de stator, et $\theta_2$ est l'angle de phase de la force magnéto-motive du deuxième enroulement de stator, et $\theta_{s1}$ est l'angle entre les angles de phase de la force magnéto-motive du rotor du moteur électrique et la force magnéto-motive du premier enroulement de stator, et $\theta_{s2}$ est l'angle entre les angles de phase de la force magnéto-motive du rotor du moteur électrique et la force magnéto-motive du deuxième enroulement de stator;
   • un module de commande DQ pour contrôler respectivement les composantes émises de l'axe D et de l'axe Q après la transformation de la coordonnée DQ, en fonction de la valeur correspondante donnée des différentes composantes fondamentales et des composantes harmoniques.

7. Système de conversion de fréquence et de réglage de vitesse d'un moteur électrique selon la revendication 6, dans lequel le dispositif de contrôle comprend en outre:

   • un module de transformation inverse de coordonnées pour effectuer la transformation inverse DQ des composantes émises selon l'axe D et l'axe Q après le contrôle avec référence aux différentes composantes fondamentales et composantes harmoniques;
   • le module de synthèse est également utilisé pour additionner chacune des phases du signal de commande émis après une transformation inverse DQ des différentes composantes fondamentales et des composantes harmoniques, afin d'obtenir la phase correspondante du signal de commande émis sur l'unité d'inversion.

8. Système de conversion de fréquence et de réglage de vitesse d'un moteur électrique selon l'une quelconque des revendications 1-7, dans lequel le signal de commande émis sur l'unité d'inversion par le dispositif de contrôle est la tension de commande.

9. Système de conversion fréquence et de réglage de vitesse d'un moteur électrique selon l'une quelconque des revendications 5-7, dans lequel le module de contrôle est un module de réglage proportionnel-intégral.

170

high-voltage
electricity grid

first contactor

130

power winding

low-voltage
electricity grid

input
contactor

rectifying unit

inverting unit

control winding

brushless double-
fed electric motor

first current
detecting unit

120

110

181

second current
detecting unit

150

140

180

operation panel

controller

190

160

## Figure 1

the detected currents of the control winding and power winding are respectively
separated into the corresponding fundamental component and harmonic component

S210

the fundamental component and harmonic component to which the current of the
control winding corresponds, and the fundamental component and harmonic
component to which the current of the power winding corresponds, are controlled
respectively

S220

the closed loop control outputs of the various fundamental components and harmonic
components are synthesized, and the output control voltage is obtained

S230

## Figure 2

Figure 3

Figure 4

Figure 5

160

current separating model /610

control module /620

synthesis module /630

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101951222 A
- US 2011074365 A1
- US 5798631 A